**Europäisches Patentamt**

**European Patent Office**

**Office européen des brevets**

(19)

(11) Numéro de publication: **0 193 418**
**B1**

## (12) FASCICULE DE BREVET EUROPEEN

(45) Date de publication du fascicule du brevet:
**28.12.88**

(51) Int. Cl.⁴: **F 16 D 65/56**

(21) Numéro de dépôt: **86400080.7**

(22) Date de dépôt: **15.01.86**

---

(54) **Moteur de frein à réglage automatique.**

---

(30) Priorité: **25.01.85 FR 8501027**

(43) Date de publication de la demande:
**03.09.86 Bulletin 86/36**

(45) Mention de la délivrance du brevet:
**28.12.88 Bulletin 88/52**

(84) Etats contractants désignés:
**DE GB IT**

(56) Documents cités:
**EP-A- 0 145 535**
**DE-A- 2 330 949**
**DE-A- 2 644 212**
**DE-A- 2 741 365**
**FR-A- 2 388 169**
**US-A- 4 064 973**

(73) Titulaire: **BENDIX France, 126, rue de Stalingrad,**
**F-93700 Drancy (FR)**

(72) Inventeur: **Sauvée, Jean-Paul, 76 bld. Félix Faure,**
**F-93300 Aubervilliers (FR)**

(74) Mandataire: **Lejet, Christian et al, Division Technique**
**Service Brevets BENDIX Europe 126, rue de Stalingrad,**
**F-93700 Drancy (FR)**

---

**Description**

L'invention se rapporte à un moteur de frein susceptible de mettre en œuvre un frein notamment destiné à équiper un véhicule automobile.

L'invention concerne en particulier un moteur de frein à réglage automatique destiné à compenser automatiquement l'usure des garnitures de friction afin de maintenir la course de la pédale de frein et de la commande mécanique si le frein en est équipé nécessaire à la mise en œuvre de ce dernier à un niveau sensiblement constant et faible.

On connaît de nombreux moteurs de freins équipés de dispositif à réglage automatique, par exemple celui décrit dans la demande de brevet eurpéen No 0 145 535 au nom de la demanderesse. Dans ce moteur de frein, il est prévu un réglage automatique du type comportant un mécanisme d'actionnement à vis-écrou dont l'allongement est commandé par un système combiné à vis-écrou à pas réversible et embrayage unidirectionnel sensible au déplacement axial relatif entre le piston de commande et le corps fixe recevant le piston.

Le brevet américain No 4 064 973 décrit aussi un moteur de frein pourvu d'un mécanisme de réglage automatique comprenant un anneau denté fixé à un piston de commande, et qui maintient une rondelle élastique sur ce piston. Une vis du mécanisme d'actionnement à vis-écrou traverse l'anneau denté et possède une extrémité de diamètre plus grand destinée à s'appliquer sur la rondelle élastique lors de la manœuvre d'un mécanisme de réglage manuel. Le mécanisme de réglage automatique comprend aussi un doigt 118 monté rotatif sur la vis et coopérant avec une des dents de l'anneau denté par l'intermédiaire d'un ressort.

Le brevet français No 2 388 169 est relatif à un moteur de frein comprenant un mécanisme de réglage à vis-écrou, deux pièces annulaires ayant des surfaces de friction coopérantes tronconique et partiellement sphérique et sollicitées l'une contre l'autre par des rondelles élastiques pour former un embrayage à glissement ayant un couple de glissement prédéterminé par la compression des rondelles élastiques.

Bien que donnant satisfaction dans la plupart des cas, ces dispositifs peuvent présenter des fonctionnements aléatoires dans certains cas particuliers. Un tel cas particulier peut se présenter, par exemple, lorsque le mécanisme d'actionnement à vis-écrou ne supporte pas de charge axiale c'est notamment le cas dans un frein à disque lorsqu'il y a un jeu important entre le mécanisme à vis-écrou et l'élément de friction à solliciter. Le frottement entre la vis et l'écrou étant faible, cet écrou est susceptible de tourner sous l'effet du système combiné à vis-écrou à pas réversible et embrayage unidirectionnel, sans mettre en œuvre celui-ci, et donc le mécanisme d'actionnement sera successivement légèrement raccourci lors de l'application de freinage et légèrement rallongé lors du relâchement du freinage par rotations successives de l'écrou dans un sens puis dans l'autre, la fonction du réglage automatique n'ayant pas été remplie.

L'invention propose un moteur de frein à réglage automatique ne comportant pas l'inconvénient mentionné ci-dessus, et présentant donc une fiabilité accrue.

Dans ce but l'invention propose un moteur de frein à réglage automatique du type comportant un mécanisme d'actionnement à vis-écrou dont l'allongement est commandé par un système combiné à vis-écrou à pas réversible et embrayage unidirectionnel sensible au déplacement axial relatif entre un piston de commande et un corps fixe recevant ledit piston de commande immobilisé en rotation par rapport au corps, ledit moteur de frein comportant un dispositif de contrôle de la rotation d'un élément du mécanisme d'actionnement autorisant la rotation dudit élément au-delà d'une valeur prédéterminée du couple de mise en rotation de celui-ci, caractérisé en ce que ledit élément est l'écrou du mécanisme d'actionnement et en ce que ledit dispositif de contrôle comporte deux surfaces en vis à vis sollicitées en contact de friction l'une contre l'autre, l'une de ces surfaces étant solidaire dudit écrou, l'autre de ces surfaces, étant formée sur un élément annulaire immobilisé en rotation par rapport audit corps comportant au moins une saillie pénétrant dans une rainure axiale formée dans ledit piston de commande, une fourche reliée à un fourreau du piston de commande, et guidée par une partie solidaire du corps immobilisant en rotation ledit piston de commande par rapport au corps.

Avec un tel agencement, la rotation de l'écrou ne peut intervenir lors de l'application du freinage que au-delà d'un couple prédéterminé, ce qui permet dans toutes les conditions normales de fonctionnement, l'immobilisation dudit écrou, le système à vis-écrou à pas réversible mettant en œuvre l'embrayage unidirectionnel dans le sens où celui-ci autorise la rotation. La rotation de l'écrou étant contrôlée, l'inconvénient mentionné ci-dessus est supprimé.

On décrira maintenant à titre d'exemple non limitatif un mode de réalisation de l'invention en se référant aux dessins annexés dans lesquels:
– la Figure 1 est une vue partielle en coupe d'un moteur de frein réalisé conformément à l'invention;
– la Figure 2 est une coupe selon la ligne II–II du moteur de frein représenté sur la Figure 1.

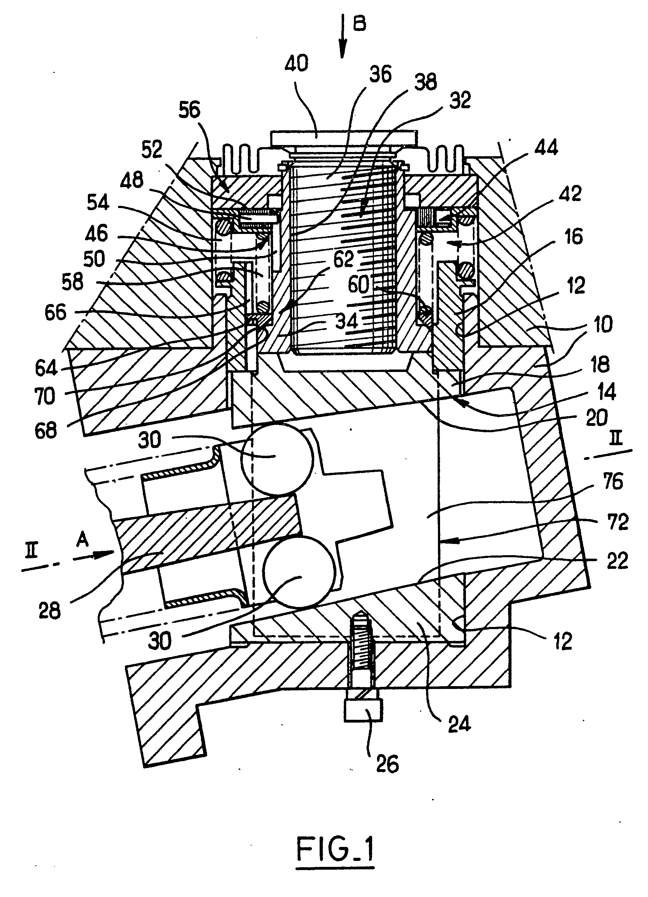

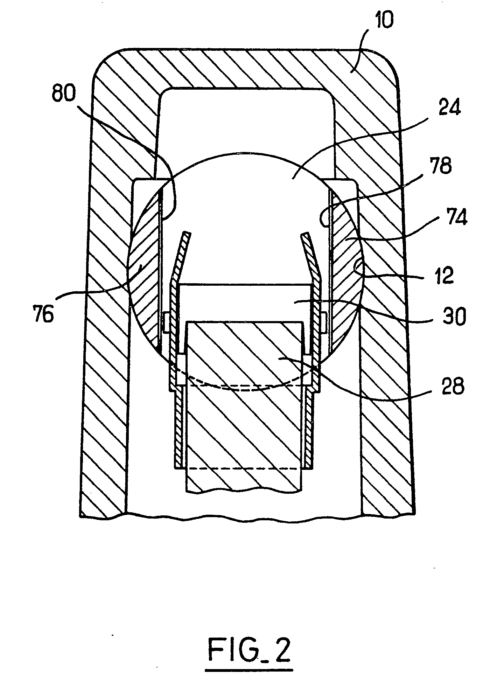

Le moteur de frein représenté sur les Figures 1 et 2 est du type à commande à coin selon un agencement utilisé en particulier dans les freins à disques. Ce moteur de frein comporte d'une façon conventionnelle un corps 10 comportant un alésage 12 dans lequel est monté coulissant un piston de commande 14 formé par un fourreau 16 et une pièce de pression 18 présentant une surface oblique 20 placée en vis à vis d'une autre surface oblique 22 formée sur une pièce de réaction 24 également montée dans l'alésage 12 et solidaire du corps 10 au moyen d'une vis 26. Ces deux surfaces obliques 20 et 22 sont susceptibles d'être écartées au moyen d'un coin 28 au travers de galets 30 lorsque le coin est inséré dans le moteur de frein dans le sens de la flèche A de la Figure 1.

Le piston 14 par l'intermédiaire d'un mécanisme d'actionnement à vis-écrou désigné dans son ensemble par la référence 32 est susceptible de déplacer un élément de friction adjacent (non représenté) pour mettre en œuvre le frein à disque. Ce mécanisme d'actionnement à vis-écrou 32 est formé par un écrou 34 en appui sur la pièce de pression 18, écrou qui reçoit une vis 36 au moyen d'une liaison filetée à pas non réversible 38, la vis 36 se terminant par un poussoir 40 susceptible de déplacer l'élément de friction adjacent (non-représenté). Le moteur de frein comporte également un système combiné à vis-écrou à pas réversible et embrayage unidirectionnel désigné dans son ensemble par la référence 42. Ce système combiné 42 comporte un embrayage unidirectionnel désigné dans son ensemble par la référence 44 et formé dans le mode de réalisation représenté par une roue libre à galets et rampes, le système combiné 42 comporte également un système à vis-écrou à pas réversible désigné dans son ensemble par la référence 46 formé par des doigts 48 pénétrant dans des rainures hélicoïdales 50 formées sur la périphérie de l'écrou 34. Les doigts 48 sont portés par une pièce porte-doigts 52 solidaire de l'embrayage unidirectionnel 44 et dont la rotation est commandé par cet embrayage unidirectionnel 44 selon le sens dans lequel les rainures 50 sollicitent les doigts 48. Un premier ressort 54 est placé entre une pièce de guidage 56 fixe par rapport au corps 10 et le fourreau 16 de manière à repousser le piston 14 dans le sens de la flèche B de la Figure 1 pour maintenir en contact le piston 14 et plus précisément la surface oblique 20 avec les galets 30 et coin 28. Un second ressort 58, plus faible que le premier ressort 54, sollicite l'écrou 34 en appui sur la pièce de pression 18 au travers d'un élément annulaire 60.

Conformément à l'invention, le moteur de frein comporte un dispositif de contrôle de la rotation de l'écrou du mécanisme d'actionnement désigné dans son ensemble par la référence 62. Ce dispositif de contrôle 62 comporte l'élément annulaire 60 qui présente une saillie 64 pénétrant dans une rainure axiale 66 formée intérieurement dans le fourreau 16. Le dispositif 62 comporte également deux surfaces 68 et 70 tronconiques et co-axiales formées respectivement l'une 68 sur l'écrou 34 l'autre 70 sur l'élément annulaire 60. Le ressort 58 sollicitant les deux surfaces 68 et 70 l'une contre l'autre en engagement de friction. Le piston de commande 14 est immobilisé en rotation par rapport au corps 10 au moyen d'une fourche 72 formée sur le fourreau 16 au moyen de deux bras 74 et 76 obtenue par fraisage du fourreau 16, guidée dans l'alésage 12 et qui passe de part et d'autre de la pièce de réaction 24, immobilisée par rapport au corps 10 et présentant des méplats 78 et 80 de forme conjuguée au fraisage du fourreau 16, immobilisant en rotation ce fourreau 16 et donc le piston 14 par rapport au corps 10. La pièce de pression 18 est également montée dans le même fraisage ce qui permet d'assurer un positionnement relatif correct des deux surfaces obliques 20 et 22.

Le fonctionnement du moteur de frein est en tout point similaire à celui décrit dans la demande de brevet européen No 84 402 141.0, auquel on se reportera avantageusement, à l'exception du fonctionnement du dispositif de contrôle 62 que l'on va préciser.

Lorsque le coin 28 est inséré dans le moteur de frein dans le sens de la flèche A le piston 14 est repoussé dans le sens inverse de la flèche B de la Figure 1. L'écrou 34 par sa rainure héliocoïdale 50 coopère avec le doigt 48 et est sollicité en rotation par ce doigt 48 au fur et à mesure de la progression de l'écrou 34 dans le sens inverse de la flèche B. Comme le dispositif de contrôle 62 au moyen du ressort 58 et des deux surfaces tronconiques 68 et 70 immobilise en rotation cet écrou 34 grâce à la saillie 64 à la rainure 66 et à la fourche 72 l'écrou 34 ne peut tourner, le doigt 48 est alors sollicité en rotation avec sa pièce porte-doigt 52 dans le sens autorisé par l'embrayage unidirectionnel 44. Au relâchement du frein, l'embrayage unidirectionnel 44 interdisant la rotation de la pièce porte-doigts 52, les doigts 48 au travers de la rainure héliocoïdale 50 sollicitent en rotation l'écrou 34 qui pourra tourner en rotation forcée l'encontre du couple prédéterminé par le ressort 58 et les deux surfaces tronconiques 68 et 70 provoquant l'allongement désiré du mécanisme à vis-écrou.

Le dispositif de contrôle de la rotation de l'écrou 34 permet donc d'assurer lors de l'application du freinage la mise en œuvre de l'embrayage unidirectionnel 44 dans le sens de rotation autorisé sans risque de rotation de l'écrou 34, au relâchement du freinage le couple résistant présenté par l'embrayage unidirectionnel 34 étant tel que l'écrou 34 peut tourner en rotation forcée lorsque cela est nécessaire. On notera que l'interposition de l'élément annulaire 60 entre le ressort de compression héliocoïdal 58 et l'écrou 34 évite également, du fait de l'immobilisation en rotation de l'élément annulaire 60, la mise en rotation de l'écrou 34 par le ressort 58, étant donné qu'il est bien connu qu'un ressort héliocoïdal lorsqu'il est comprimé ou détendu présente une rotation relative de ses deux extrémités.

Il est bien évident que le mode de réalisation décrit ne limite pas l'invention et que des modifications peuvent être apportées sans sortir du cadre de la présente invention, par exemple le dispositif de contrôle 62 peut présenter des surfaces planes placées en vis à vis, l'embrayage unidirectionnel peut être réalisé au moyen de ressorts de friction et enfin la pièce de réaction 24 peut être remplacée par un autre piston de commande agissant sur un autre élément de friction.

## Revendications

1. Moteur de frein à réglage automatique du type comportant un mécanisme d'actionnement à vis-écrou (32) dont l'allongement est commandé par un système combiné à vis-écrou à pas réversible et embrayage unidirectionnel (42) sensible au déplacement axial relatif entre un piston de commande (14) et un corps fixe (10) recevant ledit piston de commande (14) immobilisé en rotation par rapport au corps (10) ledit moteur de frein comportant un dispositif de contrôle (62) de la rotation d'un élément (34) du mécanisme d'actionnement (32) autorisant la rotation dudit élément (34) au-delà d'une valeur prédéterminée du couple de mise en rotation de celui-ci, caractérisé en ce que ledit élément (34) est l'écrou du mécanisme d'actionnement et en ce que ledit dispositif de contrôle (62) comporte deux surfaces (68, 70) en vis à vis sollicitées en contact de friction l'une contre l'autre, l'une (68) de ces surfaces (68, 70) étant solidaire dudit écrou (34), l'autre (70) de ces surfaces (68, 70) étant formée sur un élément annulaire (60) immobilisé en rotation par rapport audit corps (10), comportant au moins une saillie (64) pénétrant dans une rainure axiale (66) formée dans ledit piston de commande (14), une fourche (72) reliée à un fourreau (16) du piston de commande (14), et guidée par une partie (24) solidaire du corps (10) immobilisant en rotation ledit piston de commande (14) par rapport au corps (10).

2. Moteur de frein selon la revendication 1, caractérisé en ce qu'un ressort de compression (58) sollicite les deux surfaces (68, 70) l'une contre l'autre en engagement de friction définissant ledit couple prédéterminé au-delà duquel ledit écrou (34) est susceptible de tourner en rotation forcée.

3. Moteur de frein selon la revendication 2, caractérisé en ce que lesdites surfaces (68, 70) sont tronconiques et coaxiales.

4. Moteur de frein selon la revendication 2 ou 3, caractérisé en ce que ledit ressort (58) prend appui sur une pièce (56) axialement fixe par rapport au corps (10).

**Patentansprüche**

1. Bremsmotor mit selbsttätiger Nachstellvorrichtung, bestehend aus einem Spindel-Mutter-Betätigungsmechanismus (32), dessen Ausfahrbewegung von einem aus einer reversiblen Spindel-Mutter-Anordnung und einer Einwegkupplung zusammengesetzten System (42) gesteuert wird, das auf eine axiale Relativverschiebung zwischen einem Steuerkolben (14) und einem ortsfesten Gehäuse (10) anspricht, in welchem der Steuerkolben (14) drehfest relativ zum Gehäuse (10) angeordnet ist, wobei der Bremsmotor eine Steuervorrichtung (62) zur Steuerung der Drehbewegung eines Elementes (34) des Betätigungsmechanismus (32) aufweist, was eine Drehung dieses Elementes (34) oberhalb eines vorgegebenen Wertes des dieses Element in Drehung versetzenden Drehmomentes erlaubt, dadurch gekennzeichnet, dass das besagte Element (34) die Mutter des Betätigungsmechanismus ist und dass die Steuervorrichtung (62) zwei Flächen (68, 70) aufweist, die

in Reibanlage miteinander gedrückt werden, v bei die eine (68) dieser Flächen (68, 70) mit ( Mutter (34) fest verbunden ist, während die an re (70) dieser Flächen (68, 70) an einem Ring (60) gebildet ist, das bezüglich des Gehäuses ( drehfest ist und das mindestens einen Vorspru (34) aufweist, welcher in eine axiale Nut (66) Steuerkolben (14) greift, wobei eine Gabel (7 die mit einer Hülse (16) des Steuerkolbens ( verbunden und von einem Gehäuse (10) vorge henen Abschnitt (24) geführt ist, den Steuerkolb (14) bezüglich des Gehäuses (10) gegen eine D hung sichert.

2. Bremsmotor nach Anspruch 1, dadurch ( kennzeichnet, dass eine Druckfeder (58) die b den Flächen (68, 70) in gegenseitige Reibanla drückt, wodurch das vorgegebene Drehmome definiert wird, oberhalb dessen die Mutter ( eine Zwangsdrehung ausführen kann.

3. Bremsmotor nach Anspruch 2, dadurch ( kennzeichnet, dass die besagten Flächen (68, 7 kegelstumpfförmig und koaxial sind.

4. Bremsmotor nach Anspruch 2 oder 3, c durch gekennzeichnet, dass die Feder (58) an ( nem bezüglich des Gehäuses (10) axial festgele ten Bauteil (56) abgestützt ist.

**Claims**

1. Brake actuator with automatic adjustment the type comprising a screw and nut actuati mechanism (32) the lengthening of which is co trolled by a combined system with a screw a nut of reversible pitch and a unidirectionel clut (42) which is sensitive to the relative axial mov ment between a control piston (14) and a fix body (10) housing the said control piston (1 immobilized in rotation relative to the body (1 the said brake actuator comprising a device f controlling (62) the rotation of a component (34) the actuating mechanism (32) allowing rotation the said component (34) beyond a predetermin value of torque for rotating the latter characteriz in that the said component (34) is the nut of tl actuating mechanism and in that the said contr device (62) comprises two surfaces (68, 70) faci one another and pushed into frictional conta against one another, one surface (68) of the surfaces (68, 70) being firmly fixed to the said n (34), the other surface (70) of these surfaces (6 70) being formed on an annular component (6( immobilized in rotation relative to the said bod comprising at least one projection (64) enterir into an axial groove (66) formed in the said contr piston (14), a fork (72) connected to a sleeve (16) the control piston (14) and guided by a porti (24) which is firmly fixed to the body (10) ir mobilizing in rotation the said control piston (1 relative to the body (10).

2. Brake actuator according to Claim 1, chara terized in that a compression spring (58) push the two surfaces (68, 70) against one another frictional engagement defining the said predete

mined torque beyond which the said nut (34) is capable of turning in forced rotation.

3. Brake actuator according to Claim 2, characterized in that the said surfaces (68, 70) are frusto-conical and coaxial.

4. Brake actuator according to Claim 2 or 3, characterized in that the said spring (58) bears against a component (56) which is fixed axially relative to the body (10).

FIG_1

FIG_2